# EUROPÄISCHE PATENTANMELDUNG

(11) **EP 3 609 143 A1**
(43) Veröffentlichungstag der Anmeldung: **12.02.2020**
(21) Anmeldenummer: 18187459.5
(22) Anmeldetag: 06.08.2018
(51) Int. Cl.: H04L 12/751, H04L 12/24, H04L 12/715, H04L 12/741

(54) **VERFAHREN ZUM AUTOMATISCHEN KONFIGURIEREN VON ROUTEN, VERFAHREN ZUR DATENKOMMUNIKATION, STEUERUNGSVERFAHREN, ROUTER, COMPUTERPROGRAMM UND COMPUTERLESBARES MEDIUM**

(71) Anmelder: Siemens Aktiengesellschaft, 80333 München (DE)
(72) Erfinder: Albrecht, Harald, 90475 Nürnberg (DE); Höme, Stephan, 91126 Schwabach (DE); Talanis, Thomas, 91336 Heroldsbach (DE)

(57) **Zusammenfassung**

Die Erfindung betrifft ein Verfahren zum automatischen Konfigurieren von Routen in einem insbesondere industriellen Netzwerk bevorzugt einer industriellen Automatisierungsanlage, bei dem von wenigstens einem Router (11, 13) an einem downstream-Interface (15, 16) wenigstens eine Router-Advertisement-Nachricht (19) mit wenigstens einer spezifischen Route empfangen wird, und eine Sende-Funktionseinheit (17) des wenigstens einen Routers (11, 13) bevorzugt automatisch konfiguriert wird, wenigstens eine Router-Advertisement-Nachricht (20), welche die wenigstens eine spezifische Route und/oder wenigstens eine Über-Route, in der die wenigstens eine spezifische Route mit wenigstes einer weiteren, an dem gleichen oder einem anderen downstream-Interface (15, 16) des wenigstens einen Routers (11, 13) empfangenen spezifischen Route zusammengefasst ist, aufweist, über ein upstream-Interface (14) des wenigstens einen Routers (11, 13) zu senden. Darüber hinaus betrifft die Erfindung ein Verfahren zur Datenkommunikation, ein Steuerungsverfahren für einen industriellen technischen Prozess oder ein Fahrzeug, einen Router, ein Computerprogramm und ein computerlesbares Medium.

## Beschreibung

Verfahren zum automatischen Konfigurieren von Routen, Verfahren zur Datenkommunikation, Steuerungsverfahren, Router, Computerprogramm und computerlesbares Medium

Die Erfindung betrifft ein Verfahren zum automatischen Konfigurieren von Routen in einem industriellen Netzwerk insbesondere einer industriellen Automatisierungsanlage. Darüber hinaus betrifft die Erfindung ein Verfahren zur Datenkommunikation, ein Steuerungsverfahren für einen industriellen technischen Prozess oder ein Fahrzeug, einen Router, ein Computerprogramm und ein computerlesbares Medium.

Der Anmelderin ist die Möglichkeit bekannt, auch Endgeräte mit "spezifischen Routen" konfigurieren zu können. Eine "spezifische Route" ist dabei im Gegensatz zu einer (unspezifischen) Default Route zu verstehen: während eine spezifische Route auf einen bestimmten Adressbereich verweist, erfasst eine Default Route alles, was nicht durch spezifische Routen abgedeckt ist.

Ein Nachteil der Konfigurierung spezifischer Routen ist, dass diese manuell zu erfolgen hat. Die Konfigurierung wird in einem zentralen Netzwerk-Planungstool, insbesondere von einem Routen-Planer (beispielsweise gemäß dem "Industrial Ethernet Switches SCALANCE X-300/X-400 Projektierungshandbuch", erhältlich unter https://cache.industry.siemens.com/dl/files/297/109757297/att _949572/v1/PH_SCALANCE-X-300-X-400_0.pdf) zentral berechnet und dann müssen in alle Geräte die jeweils benötigten Routen geladen werden. Diese Vorgehensweise ist recht starr und es wird teilweise als nachteilig erachtet, dass in größeren Installationen mitunter längere Download- und/oder Rekonfigurations-Stillstände auftreten können.

IPv6 besitzt - im Gegensatz zu IPv4 - einen Mechanismus, mit dessen Hilfe im laufenden Netzbetrieb den Netzteilnehmern dynamisch neue, spezifische Routen mitgeteilt werden können, ohne dazu dedizierte, externe Routing-Protokolle wie etwa OSPF, RIP oder dergleichen zu benötigen. Dieser Mechanismus ist im RFC 4191 "Default Router Preferences and More-Specific Routes" (https://tools.ietf.org/html/rfc4191) definiert. Dieser Standard erfasst allerdings abseits der reinen Übertragung spezifischer Routen nicht weiter, wie diese Informationen überhaupt erst einmal in ein System hineinkommen. Die spezifischen Routen sind manuell zu konfigurieren.

Insbesondere für ein aufwandsarm zu betreibendes Automatisierungsnetzwerk ist es wünschenswert, dass industrielle Anwender nicht mit solchen Details belastet werden. Das erforderliche detaillierte Netzwerk- und IT-Know-How ist auf Seiten von Anwendern oftmals gar nicht erwünscht, weil es kein Primärziel ist und zusätzliche Kosten verursacht.

Es ist daher erstrebenswert, eine möglichst weit reichende Autokonfiguration zu ermöglichen.

Aus der Network Working Group der IETF (Internet Engineering Task Force) ist das Konzept des "DHCP-PD Snoopings" bekannt (siehe Internet-Draft "SAVI Solution for Delegated IPv6 Prefixes draft-kaippallimalil-savi-dhcp-pd-01.txt" https://tools.ietf.org/html/draft-kaippallimalil-savi-dhcp-pd-01, Stand Februar 2010, erloschen August 2010), um daraus Paketfilter-Regeln zu generieren.

Weiterhin ist aus der Network Working Group der IETF in dem Internet Draft "Route Problem at Relay during DHCPv6 Prefix Delegation" (https://tools.ietf.org/html/draft-petrescurelay-route-pd-problem-OO, Stand Oktober 2013, erloschen April 2014) das Routen-Problem auf Zwischenroutern im Rahmen der sogenannten Präfix-Delegation wie folgt diskutiert:
1. das Mithören von delegierten Präfixen mittels DHCPv6 Message Snooping in DHCPv6 Relays,
2. das explizite Einfügen einer neu zu definierenden DHCPv6-Option, die dann von jedem im Zuge einer Präfix Delegation durchlaufenden DHCPv6 Relay vom Server mit angefordert wird, so dass auf dem Rückweg sämtliche Relays die erforderliche Information direkt vom DHCPv6 Server erhalten. (Separater Internet Draft: https://tools.ietf.org/html/draft-ietf-dhc-dhcpv6-prefix-pool-opt-03, Stand April 2013, Erloschen Oktober 2013 ohne Nachfolge-Entwurf)
3. eine neu zu definierende DHCPv6 Aggregierte-Routen-Option, durch die Relays aggregierte Routen als eigenständiges Element direkt von delegierenden Routern erfragen, völlig losgelöst von der eigentlichen Präfix Delegation zu den einzelnen anfragenden Routern. (Separater Internet-Draft: https://tools.ietf.org/html/draft-joshi-dhc-dhcpv6-aggr-route-opt-01, Stand März 2012, erloschen September 2011 ohne Nachfolge-Entwurf)

Zu sämtlichen diskutierten Optionen sind in dem Internet Draft Nachteile genannt. Insbesondere an der unter 1. aufgeführten Lösung, also dem DHCPv6 Message Snooping, ist auch nachteilig, dass entweder eine speziell erweiterte DHCPv6-Relay-Software erforderlich ist, oder aber der DHCPv6-Verkehr direkt auf der L2- oder L3-Ebene mitgeschnitten werden muss.

Eine Aufgabe der vorliegenden Erfindung besteht darin, eine bessere Möglichkeit zum automatischen Konfigurieren von Routen in einem Netzwerk insbesondere einer industriellen Automatisierungsanlage zu schaffen.

Diese Aufgabe wird gelöst durch ein Verfahren zum automatischen Konfigurieren von Routen in einem insbesondere industriellen Netzwerk bevorzugt einer industriellen Automatisierungsanlage, bei dem von wenigstens einem Router an einem downstream-Interface wenigstens eine Router-Advertisement-Nachricht mit wenigstens einer spezifischen Route empfangen wird, und eine Sende-Funktionseinheit des wenigstens einen Routers bevorzugt automatisch konfiguriert wird, wenigstens eine Router-Advertisement-Nachricht, welche die wenigstens eine spezifische Route und/oder wenigstens eine Über-Route, in der die wenigstens eine spezifische Route mit wenigstes einer weiteren, an dem gleichen oder einem anderen downstream-Interface des wenigstens einen Routers empfangenen spezifischen Route zusammengefasst ist, aufweist, über ein upstream-Interface des wenigstens einen Routers zu senden.

Die Aufgabe wird darüber hinaus gelöst durch einen Router, der zur Durchführung des erfindungsgemäßen Verfahrens ausgestaltet und eingerichtet ist. Der erfindungsgemäße Router umfasst dazu insbesondere eine Specific-Router-Manager-Funktionseinheit, welche ausgebildet und/oder eingerichtet ist, um spezifische Routen aus Router Advertisement Nachrichten, die an einem oder mehreren downstream-Interfaces des Routers empfangen werden, zu erhalten und eine Sende-Funktionseinheit des Routers bevorzugt automatisch zu konfigurieren, wenigstens eine Router-Advertisement-Nachricht, welche wenigstens eine an einem downstream-Interface empfangene spezifische Route und/oder wenigstens eine Über-Route, in der wenigstens eine an einem downstream-Interface empfangene spezifische Route mit wenigstes einer weiteren, an dem gleichen oder einem anderen downstream-Interface des Routers empfangenen spezifischen Route zusammengefasst ist, aufweist, über ein upstream-Interface des Routers zu senden.

Der vorliegenden Erfindung ermöglicht es, dass Subnetz-Routen, die per Router Advertisement Nachrichten insbesondere von unterlagerten Routern bekannt gemacht werden und an einem oder mehreren downstream-Interface(s) eines Routers ankommen, bevorzugt automatisch gesammelt, gegebenenfalls zusammengefasst und auf der nächst höheren Hierarchie-Ebene bekannt gemacht werden, indem ein Senden dieser insbesondere ausschließlich über ein upstream-Interface des Routers bzw. der Router erfolgt.

So wird es möglich, dass Anwender auch ohne IT-Kenntnisse sehr einfach Router-Hierarchien aufbauen können, wobei spezifische Routen automatisch verkündet und optimiert werden. Es kann ein optimiertes, adaptives Routing innerhalb einer Hierarchie erfolgen, ohne dass es einer statischen Planung bedarf. Stillstände beispielsweise einer Anlage mit einem Netzwerk aufgrund einer erforderlichen manuellen (Um-)Konfigurierung können zuverlässig und vollständig vermieden werden.

Eine spezifische Route ist dabei insbesondere im Gegensatz zu einer (unspezifischen) Default Route zu verstehen. Eine spezifische Route verweist auf einen bestimmten Adressbereich, wohingegen eine Default Route alle Ziele erfasst, die nicht durch spezifische(re) Routen abgedeckt sind. Eine Default Route definiert insbesondere die zu verwendende Paketweiterleitungsregel, wenn keine spezifische Route (engl.: specific route) für eine gegebene Internet Protokoll (IP) Zieladresse (engl.: destination address) bestimmt werden kann.

Bei dem wenigstens einen Router kann es sich um einen Subnetz-Router handeln.

Unter einem Subnetz ist insbesondere ein IP-Subnetz zu verstehen, also ein Teilnetz eines Netzwerkes beim Internetprotokoll (IP). Ein Subnetz fasst in der Regel mehrere aufeinanderfolgende IP-Adressen mittels einer Subnetzmaske an binären Grenzen unter einem gemeinsamen Vorderteil, dem sogenannten Präfix zusammen. Im Falle von IPv6 spricht man bei der Subnetzmaske auch von der Präfixlänge. Ein Schema zur Unterteilung von Netzen wurde 1985 eingeführt und 1992 im RFC 950 erstmals standardisiert.

Unter einem unterlagerten Router ist insbesondere ein solcher zu verstehen, der eines oder mehrere Subnetze verantwortet, die sich alle innerhalb eines von einem überlagerten Router verantworteten Adressbereich befinden.

Bei einem upstream-Interface, also einer upstream-Schnittstelle eines Routers handelt es sich insbesondere um ein Interface, welches in Richtung der default-Route und/oder in Richtung wenigstens eines überlagerten Subnetzes und/oder Routers zeigt. Ein downstream-Interface ist insbesondere ein solches, welches in Richtung wenigstens eines unterlagerten Subnetzes zeigt. Das bzw. die downstream-Interfaces des wenigstens einen Routers sind bzw. werden insbesondere mit wenigstens einem unterlagerten Subnetz verbunden. Bevorzugt sind bzw. werden verschiedene downstream-Interfaces des wenigstens einen Routers mit verschiedenen unterlagerten Subnetzen verbunden.

Unter einem Router ist, insbesondere im Sinne des IETF-Standard-Entwurfes RFC 4861, jeder Knoten (bzw. jedes Gerät) zu verstehen, welcher IP Pakete weiterleitet (forwarded), die nicht explizit an ihn adressiert sind.

Bei einem Router kann es sich beispielsweise um ein (separates) Gerät bzw. eine (separate) Hardware-Komponente handeln, welche ausgebildet und/oder eingerichtet ist, diese Funktion zu erfüllen. Selbstverständlich ist es auch möglich, dass ein Router als "Software-Router" bzw. "Soft-Router" vorliegt, etwa in Form eines Computerprogrammes bzw. einer Computerprogramm-Sammlung, die auf einer zu dessen/deren Ausführung ausgebildeten Einrichtung, etwa einem PC oder einer anderen Recheneinrichtung oder einem beliebigen anderen Gerät, abgelegt ist. Ein Router bzw. die Router-Funktion kann beispielsweise auch in eine Steuerung, etwa eine speicherprogrammierbare Steuerung (SPS) eines Automatisierungssystems oder in ein anderes Gerät integriert sein, dies sowohl in Form von Hardware- als auch Software.

Unter den Begriff Router im Sinne der vorliegenden Anmeldung fallen sämtliche der vorgenannten Möglichkeiten, insbesondere auch "Soft-Router" sowie Geräte, die eigentlich andere Funktionen ausführen bzw. einem anderen Zweck dienen, aber auch eine Router-Funktion übernehmen, also auch Daten weiterleiten, die nicht explizit an sie adressiert sind. Zum Beispiel ist auch eine Steuerung, etwa speicherprogrammierbare Steuerung, welche zur Durchführung des erfindungsgemäßen Verfahrens zum automatischen Konfigurieren von Routen ausgebildet und/oder eingerichtet ist, als Router gemäß der vorliegenden Erfindung zu erachten, bzw. wenn in diese eine separate Einrichtung, die entsprechend ausgebildet und/oder eingerichtet ist, integriert ist, umfasst eine solche Steuerung einen Router nach der vorliegenden Erfindung.

Üblicherweise hat ein Router wenigstens ein upstream-Interface und wenigstens ein downstream-Interface. Es kann aber auch sein, dass ein Router nur ein einziges (physisches) Interface aufweist, und die Unterscheidung zwischen up- und downstream allein Software-basiert erfolgt. Als Interface kann ein Port eines Routers dienen.

Die Sende-Funktionseinheit des wenigstens einen Routers ist insbesondere für das korrekte Abwickeln des Router-Advertisement-Protokolls ausgebildet und/oder eingerichtet. Die Sende-Funktionseinheit ist bevorzugt für das korrekte Versenden von Router Advertisement Nachrichten insbesondere entsprechend dem RFC 4861 der IETF (Request for Comments Nummer 4861 der Internet Engineering Task Force, https://tools.ietf.org/html/rfc4861) ausgebildet und/oder eingerichtet.

Die Sende-Funktionseinheit wird insbesondere von einer Specific-Router-Manager-Funktionseinheit konfiguriert bzw. veranlasst, (eine) Router Advertisement Nachricht(en) in upstream-Richtung zu senden, welche eine oder mehrere an einem oder mehreren downstream-Interfaces empfangene spezifische Routen bzw. Über-Routen insbesondere in Form von MSROs bzw. Bestandteile solcher, aufweist. Die Sende-Funktionseinheit wird bevorzugt automatisch zum Senden der Router Advertisement Nachricht(en) konfiguriert bzw. veranlasst.

Eine bevorzugt automatische Konfiguration kann beispielsweise über geeignete Software, etwa einen Router-Advertisement-Daemon erfolgen. Als Beispiel seien die Router-Advertisement Daemonen "radvd" oder "RAD" (insbesondere Linux) sowie "rtadvd" (insbesondere OpenBSD) genannt. Insbesondere Router Advertisement Daemonen können über Konfigurationsdateien instruiert werden, welche Informationen als Teil der Router Advertisement Nachrichten ausgestrahlt werden sollen. Beispielsweise kann insbesondere von einer Specific-Router-Manager-Funktionseinheit eine Konfigurationsdatei insbesondere mit MSROs mit wenigstens einer empfangenen spezifischen Route und/oder wenigstens einer berechneten Über-Route automatisch erstellt werden. Auch ist es möglich, dass insbesondere einer Specific-Router-Manager-Funktionseinheit mit wenigstens einer Vorlage-Datei ("Template") arbeitet. Dann kann beispielsweise ein Platzhalter in einer Vorlage-Datei mit wenigstens einer empfangenen spezifischen Route und/oder wenigstens einer berechneten Über-Route ausgefüllt werden. Insbesondere eine Specific-Router-Manager-Funktionseinheit kann wenigstens eine Vorlage-Datei/Template auch fest einprogrammiert haben.

Eine Konfigurationsdatei kann an einer bekannten/vereinbarten Stelle insbesondere auf dem wenigstens einen Router gespeichert sein. Sie kann insbesondere von einer Specific-Router-Manager-Funktionseinheit erstellt bzw. neu (mit neuem Inhalt) beschrieben werden.

Die Sende-Funktionseinheit, insbesondere ein Router-Advertisement Daemon dieser wird dann bevorzugt veranlasst, eine neu erstellte bzw. modifizierte Konfigurationsdatei (neu) zu lesen. Dies ist beispielsweise durch ein Stoppen und Neustarten insbesondere des Daemons möglich. Im Anschluss an die Übernahme einer neuen/modifizierten Konfigurationsdatei können Router Advertisement Nachrichten gemäß der neuen/modifizierten Konfigurationsdatei gesendet werden.

Die Sende-Funktionseinheit kann eine Kombination von Hard- und Software umfassen oder auch rein Software- oder rein Hardware-implementiert sein.

Die Specific-Router-Manager-Funktionseinheit des erfindungsgemäßen Routers kann ebenfalls Software-implementiert sein. Die Specific-Route-Management-Funktionseinheit kann auch eine oder mehrere Hardware-Komponenten umfassen, auf welcher/welchen eine geeignete Software installiert sein kann. Es kann sich auch um eine reine Hardware-Komponente handeln.

Es kann prinzipiell sein, dass in einem Netzwerk nur ein Router erfindungsgemäß Router Advertisement Nachrichten mit wenigstens einer spezifischen Route und/oder Über-Route über ein upstream-Interface sendet. Selbstverständlich ist es aber auch möglich, und oftmals bevorzugt, dass mehrere Router in einem Netzwerk dies tun.

In der Regel wird es so sein, dass von dem oder den Router(n) periodisch bzw. zyklisch Router-Advertisement-Nachrichten mit wenigstens einer spezifischen Route an einem oder mehreren downstream-Interfaces empfangen und/oder periodisch bzw. zyklisch Router-Advertisement-Nachrichten mit wenigstens einer spezifischen Route und/oder wenigstens einer Über-Route über ein upstream-Interface gesendet werden.

Eine Ausführungsform des erfindungsgemäßen Verfahrens zeichnet sich dadurch aus, dass jede spezifische Route, die an einem downstream-Interface des wenigstens einen Routers empfangen wird bzw. wurde über ein upstream-Interface des wenigstens einen Routers entweder in der empfangenen oder in einer zu einer Über-Route zusammengefassten Form weitergeleitet wird.

Router Advertisement Nachrichten mit wenigstens einer spezifischen Route können an einem oder auch an mehreren downstream-Interfaces der Routers ankommen.

Entsprechend kann vorgesehen sein, dass an wenigstens einem downstream-Interface des wenigstens einen Routers wenigstens eine Router-Advertisement-Nachricht mit zwei oder mehr spezifischen Routen empfangen wird, und/oder
dass an wenigstens einem downstream-Interface des wenigstens einen Routers zwei oder mehr Router-Advertisement-Nachrichten mit jeweils wenigstens einer spezifischen Route empfangen werden, und/oder dass der wenigstens eine Router zwei oder mehr downstream-Interfaces aufweist und an wenigstens zwei downstream-Interfaces jeweils wenigstens eine Router-Advertisement-Nachricht mit jeweils wenigstens einer spezifischen Route empfangen wird.

Besonders bevorzugt erfolgt zur Optimierung empfangener Routen eine Zusammenfassung dieser, sofern eine solche möglich ist.

Eine weitere Ausführungsform zeichnet sich entsprechend dadurch aus, dass zwei oder mehr spezifische Routen, die an einem oder verschiedenen downstream-Interfaces des wenigstens einen Routers empfangen werden, zu wenigstens einer gemeinsamen Über-Route zusammengefasst werden, und insbesondere über das upstream-Interface des wenigstens einen Routers wenigstens eine Router-Advertise-Nachricht mit der zusammengefassten Über-Route gesendet wird.

Ein Zusammenfassen von spezifischen Routen ist insbesondere immer dann möglich, wenn zwei (oder mehr) spezifische Routen im Adressraum direkt aneinander angrenzen und der durch die spezifischen Routen umfasste Adressraum eine exakte Potenz von zwei ist.

Zum Beispiel können die spezifischen Routen 2001:db8:0:ff::/64 und 2001:db8:0:fe::/64 zu einer gemeinsamen Über-Route 2001:db8:0:fe::/63 werden.

Für die Routen 2001:db8:0:1::/64 und 2001:db8:0:2::/64 hingegen gilt nicht, dass sie im Adressraum direkt aneinander angrenzen und der durch diese spezifischen Routen umfasste Adressraum eine exakte Potenz von zwei ist.

Zwei oder mehr spezifische Routen können insbesondere zusammengefasst werden, wenn für diese gilt, dass ihre Präfixlängen übereinstimmen und/oder dass ihre Präfixlängen größer als 1 sind, und/oder dass ihre Präfixe in allen Bits mit Ausnahme des niederwertigsten Bits übereinstimmen.

Ein Zusammenfassen von spezifischen Routen einer Lebenszeit von Null mit spezifischen Routen einer Lebenszeit ungleich Null wird in der Regel weniger zweckmäßig sein. Entsprechend gilt bevorzugt als weitere Bedingung für ein Zusammenfassen von zwei oder mehr spezifischen Routen, dass entweder alle Routen, die zusammengefasst werden eine Lebenszeit ungleich Null haben oder aber alle Routen, die zusammengefasst werden eine Lebenszeit von Null haben. Letztere Fall entspricht einem Szenario, bei dem alle zusammenfassbaren spezifischen Routen gleichzeitig abgekündigt werden.

Was den erfindungsgemäßen Router angeht, kann in Weiterbildung entsprechend vorgesehen sein, dass die Specific-Router-Manager-Funktionseinheit ausgebildet und/oder eingerichtet ist, um diejenigen spezifischen Routen aus der Specific-Route-Tabelle zusammenzufassen für die gilt, dass ihre Präfixlängen übereinstimmen und/oder dass ihre Präfixlängen größer als 1 sind, und/oder dass ihre Präfixe in allen Bits mit Ausnahme des niederwertigsten Bits übereinstimmen.

Bevorzugt werden spezifische Routen nur dann zusammengefasst, wenn für diese drei Bedingungen erfüllt sind.

Besonders bevorzugt ist weiterhin vorgesehen, dass die wenigstens eine Router-Advertisement-Nachricht, welche die wenigstens eine an einem downstream-Interface empfangene spezifische Route und/oder die wenigstens eine Über-Route umfasst, ausschließlich über ein upstream- und nicht über ein downstream-Interface des wenigstens einen Routers gesendet wird.

Weiterhin kann vorgesehen sein, dass jede von dem wenigsten einen Router empfangene spezifische Route ein Präfix und/oder eine Adresse und/oder eine Präfixlänge oder eine Angabe, aus welcher die Präfixlänge ableitbar ist, umfasst bzw. hierdurch gebildet wird.

Alternativ oder zusätzlich ist es möglich, dass jede von dem wenigstens einen Router gesendete spezifische Route und/oder Über-Route ein Präfix und/oder eine Adresse und/oder eine Präfixlänge oder eine Angabe, aus welcher die Präfixlänge ableitbar ist, umfasst bzw. hierdurch gebildet wird.

Unter einem Präfix ist insbesondere ein solches im Sinne von RFC 4291 der IETF (Request for Comments Nummer 4191 bzw. 4291 der Internet Engineering Task Force, https://tools.ietf.org/html/rfc4191 bzw. https://tools.ietf.org/html/rfc4291) zu verstehen. Ein Präfix kann eine Adresse und eine Präfixlänge umfassen (vgl. RFC 4291).

In besonders bevorzugter Ausgestaltung wird von dem wenigstens einen oder wird für den wenigstens einen Router eine Specific-Route-Tabelle geführt, in welcher spezifische Routen, die an einem downstream-Interface des wenigstens einen Routers empfangen werden oder wurden insbesondere mit zugehörigen Lebenszeiten gespeichert werden.

Was den erfindungsgemäßen Router angeht, gilt entsprechend in Weiterbildung, dass die Specific-Router-Manager-Funktionseinheit ausgebildet und/oder eingerichtet ist, um eine Specific-Route-Tabelle zu führen, in der spezifische Routen, die an einem downstream-Interface des Routers empfangen wurden, gespeichert werden.

Das Zusammenfassen von spezifischen Routen zu einer oder mehreren Über-Routen bzw. die Überprüfung, ob zusammenfassbare Routen aktuell, insbesondere in einer von oder für den Router geführten Specific-Route-Tabelle, vorhanden sind, kann ebenfalls periodisch bzw. zyklisch und/oder durch bestimmte Ereignisse getriggert erfolgen.

Entsprechend ist in weiterer vorteilhafter Ausgestaltung vorgesehen, dass bevorzugt periodisch und/oder immer dann, wenn an einem downstream-Interface eine Router Advertisement Nachricht mit wenigstens einer spezifischen Route empfangen wird, und/oder immer dann, wenn die Lebenszeit wenigstens einer in der Specific-Route-Tabelle gespeicherten spezifischen Route abgelaufen ist, überprüft wird, ob in der Specific-Route-Tabelle spezifische Routen abgelegt sind, die zu einer oder mehreren Über-Routen zusammengefasst werden können, und sofern ein Zusammenfassen von wenigstens zwei spezifischen Routen möglich ist, ein Zusammenfassen erfolgt, und insbesondere so erhaltene Über-Routen in der Specific-Route-Tabelle bevorzugt anstelle der zu diesen zusammengefasten spezifischen Routen gespeichert werden.

Die Specific-Router-Manager-Funktionseinheit des erfindungsgemäßen Routers kann entsprechend in Weiterbildung ausgebildet und/oder eingerichtet sein, um bevorzugt periodisch und/oder immer dann, wenn an einem downstream-Interface eine Router Advertisement Nachricht mit wenigstens einer spezifischen Route empfangen wird, und/oder immer dann, wenn die Lebenszeit wenigstens einer in der Specific-Route-Tabelle gespeicherten spezifischen Route abgelaufen ist, zu überprüfen, ob in der Specific-Route-Tabelle spezifische Routen gespeichert sind, die zu einer oder mehreren Über-Routen zusammengefasst werden können, und, sofern ein Zusammenfassen von wenigstens zwei spezifischen Routen möglich ist, das Zusammenfassen bevorzugt durchzuführen, und insbesondere die so erhaltenen Über-Routen in der Specific-Route-Tabelle bevorzugt anstelle der zu diesen zusammengefasten spezifischen Routen zu speichern.

Die Überprüfung nach einem Ablaufen einer Lebenszeit erfolgt bevorzugt nur dann, wenn die Lebenszeit abgelaufen ist und die betroffene spezifische Route nicht erneut empfangen wurde.

Ein Speichern einer Über-Route zusätzlich zu den spezifischen Routen, die zu dieser zusammengefasst wurden, ist natürlich auch möglich.

Besonders bevorzugt wird für jede spezifische Route und/oder jede zusammengefasste/berechnete Über-Route ein eigener Routen-Eintrag in einer Konfigurationsdatei, beispielsweise einer radvd-Konfigurationsdatei, angelegt.

Weiterhin bevorzugt wird jedes Mal, wenn überprüft wurde, ob in der Specific-Route-Tabelle spezifische Routen gespeichert sind, die zu einer oder mehreren Über-Routen zusammengefasst werden können, und/oder jedes Mal, wenn wenigstens zwei in der Specific-Route-Tabelle gespeicherte spezifische Routen zu wenigstens einer Über-Route zusammengefasst werden konnten, wenigstens eine Router Advertisement Nachricht, welche bevorzugt sämtliche aktuell in der Specific-Route-Tabelle gespeicherten spezifischen Routen und/oder Über-Routen umfasst, über ein upstream-Interface des wenigstens einen Routers gesendet.

Die Specific-Router-Manager-Funktionseinheit des erfindungsgemäßen Routers kann entsprechend ausgebildet und/oder eingerichtet sein, um die Sende-Funktionseinheit jedes Mal, wenn überprüft wurde, ob in der Specific-Route-Tabelle spezifische Routen gespeichert sind, die zu einer oder mehreren Über-Routen zusammengefasst werden können, und/oder jedes Mal, wenn wenigstens zwei in der Specific-Route-Tabelle gespeicherte spezifische Routen zu wenigstens einer Über-Route zusammengefasst werden konnten, bevorzugt automatisch zu konfigurieren, wenigstens eine Router Advertisement Nachricht, welche insbesondere sämtliche aktuell in der Specific-Route-Tabelle gespeicherten spezifischen Routen und/oder Über-Routen umfasst, insbesondere ausschließlich über ein upstream-Interface des Routers zu senden.

In der Specific-Route-Tabelle ist bzw. wird besonders bevorzugt für jede spezifische Route und/oder jede Über-Route eine zugehörige Lebenszeit abgelegt. Über die Angabe einer Lebenszeit kann eine Gültigkeitsdauer von Routen festgelegt bzw. kommuniziert werden. Als Lebenszeit einer Über-Route wird dabei bevorzugt die kürzeste Lebenszeit derjenigen spezifischen Routen gespeichert, die zu der Über-Route zusammengefasst wurden.

Die Information über die Lebenszeit empfangener spezifischer Routen wird bevorzugt zusammen mit den jeweiligen spezifischen Routen in den Router Advertisement Nachrichten übertragen, die an dem einem oder mehreren downstream-Interfaces des wenigstens einen Routers ankommen, zur Verfügung gestellt bzw. übertragen.

Eine weitere Ausführungsform zeichnet sich dadurch aus, dass die wenigstens eine über ein downstream-Interface des wenigstens einen Routers empfangene und/oder die wenigstens eine über ein upstream-Interface des wenigstens einen Routers gesendete spezifische Route und/oder Über-Route als More Specific Route Option insbesondere gemäß RFC 4191 oder als Bestandteil einer solchen gesendet wird.

Gemäß dem IPv6 Standard ist es möglich, Endgeräten jederzeit nicht nur die Default Route mitzuteilen, sondern auch spezifische Routen, insbesondere auf unterlagerte Subnetze. Dazu dient die im RFC 4191 (https://tools.ietf.org/html/rfc4191) definierte zusätzliche More-Specific Route Option (MSRO) in Router Advertisement Nachrichten (auch als Router Advertisements bezeichnet). Bei der More Specific Route Option (MSRO) einer Router Advertisement Nachricht handelt es sich insbesondere um eine More Specific Route Option gemäß RFC 4191, insbesondere um die in Punkt 2.3 des RFC 4191 beschriebenen "Route Information Option".

Bevorzugt werden spezifische Routen, die den wenigstens einen Router an einem oder auch mehreren downstream-Interfaces erreichen als MSROs bzw. Bestandteil von MSROs der Router Advertisement Nachrichten gesendet. In gleicher Weise werden bevorzugt spezifische Routen und/oder Über-Routen, welche der wenigstens eine Router über ein upstream-Interface sendet als MSROs bzw. Bestandteil von MSROs von Router Advertisement Nachrichten gesendet.

Die von dem wenigstens einen Router über ein upstream-Interface gesendete Router-Advertisement Nachricht(en) mit wenigstens einer spezifischen Route kann/können insbesondere von wenigstens einem weiteren Teilnehmer des Netzwerkes, bevorzugt wenigstens einem Nachbar-Teilnehmer des wenigstens einen Routers, empfangen werden. Dieser richtet dann bevorzugt auf Basis der wenigstens einen Router Advertisement Nachricht wenigstens eine spezifische Route ein.

Teilnehmer, welche eine oder mehrere Router Advertisement Nachrichten mit wenigstens einer spezifischen Route von dem wenigstens einen Router empfangen, können sowohl Teilnehmer sein, die sich im gleichen Subnetz befinden, also Nachbarn sind, beispielsweise Endgeräte im gleichen Subnetz, als auch hierarchisch übergeordnete Geräte, insbesondere Router.

Unter Nachbar-Teilnehmern sind insbesondere Netzwerk-Teilnehmer zu verstehen, die Nachbarn im Sinne des RFC 4861 der IETF sind, das heißt Knoten/Geräte, die sich an demselben Link (siehe ebenfalls RFC 4861) befinden. Nachbarn können beispielsweise in Form benachbarter Router, benachbarter Endgeräte (ggf. mit Router-Funktion) bzw. benachbarter Router und Endgeräte vorliegen. Router trennen verschiedene Subnetze. Nachbarn im Rahmen des erfindungsgemäßen Verfahrens können insbesondere durch Teilnehmer in einem gemeinsamen ("Zwischen-")Subnetz, von dem über Router unterlagerte Subnetze abzweigen, gegeben sein.

Auch das korrekte Abkündigen kann auf die erfindungsgemäße Weise erfolgen. Dies, indem für eine betroffene Route eine Lebenszeit von 0 kommuniziert wird. Empfängt der wenigstens eine Router an einem downstream-Interface eine Router Advertise Nachricht mit einer spezifischen Route, deren Lebenszeit auf 0 gesetzt ist, wird diese Lebenszeit zusammen mit der spezifischen Route in einer Router Advertisement Nachricht über ein upstream-Interface gesendet. Nach einer gewissen (wähl- bzw. einstellbaren) Übergangszeit wird eine abgekündigte Route mit Lebenszeit 0 bevorzugt nicht mehr weiter ausgestrahlt.

Die Specific-Router-Manager-Funktionseinheit eines erfindungsgemäßen Routers ist bevorzugt ausgebildet und/oder eingerichtet, um die Sende-Funktionseinheit bevorzugt automatisch entsprechend zu konfigurieren.

Ein weiterer Gegenstand der Erfindung ist ein Verfahren zur Datenkommunikation in einem industriellen Netzwerk, in dem wenigstens eine Route unter Durchführung des erfindungsgemäßen Verfahrens zum automatischen Konfigurieren von Routen automatisch konfiguriert wurde, und Daten zwischen dem wenigstens einen Router und wenigstens einem weiteren Teilnehmer direkt ohne Rückgriff auf einen überlagerten Router übertragen werden.

Gegenstand der vorliegenden Erfindung ist auch ein Steuerungsverfahren für einen industriellen technischen Prozess oder ein Fahrzeug, bei dem zwischen wenigstens zwei Komponenten einer Automatisierungsanlage Daten unter Durchführung des erfindungsgemäßen Verfahrens zur Datenkommunikation übertragen werden und auf Basis der übertragenen Daten eine Steuerung des industriellen technischen Prozesses oder Fahrzeugs erfolgt.

Weiterhin betrifft die Erfindung ein Computerprogramm, das Programmcodemittel zur Durchführung der Schritte des erfindungsgemäßen Verfahrens zum automatischen Konfigurieren von Routen bzw. des erfindungsgemäßen Verfahrens zur Datenkommunikation bzw. des erfindungsgemäßen Steuerungsverfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zum automatischen Konfigurieren von Routen bzw. des erfindungsgemäßen Verfahrens zur Datenkommunikation bzw. des erfindungsgemäßen Steuerungsverfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Teildarstellung eines Netzwerkes einer industriellen Automatisierungsanlage mit mehreren Subnetzen,
- FIG 2: eine rein schematische, vergrößerte Blockbild-Darstellung einer Ausführungsform eines erfindungsgemäßen Routers aus dem Netzwerk aus FIG 1.

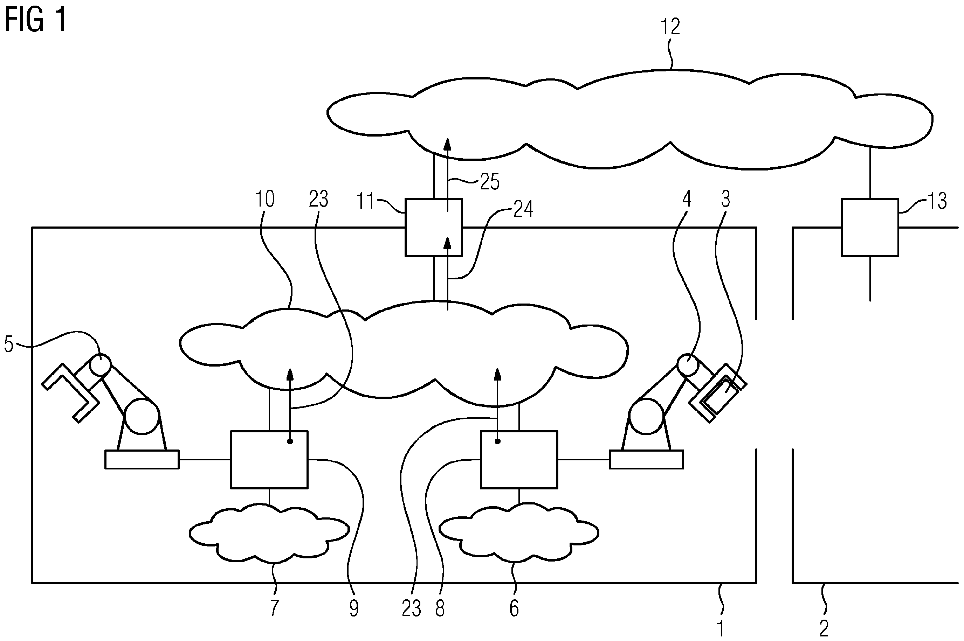

Die FIG 1 zeigt in rein schematischer Darstellung einen Ausschnitt einer Produktionslinie in einer industriellen Fertigungsanlage, die aus mehreren Fertigungszellen besteht, von denen hier beispielhaft zwei Fertigungszellen 1, 2 gezeigt sind.

Ein zu fertigendes Produkt 3 durchläuft der Reihe nach die verschiedenen Fertigungszellen 1, 2, um schrittweise fertiggestellt zu werden. Dabei wird das Produkt 3 an einer oder auch mehreren Stellen - in der FIG 1 ist nur eine solche Stelle beispielhaft gezeigt - von einem Roboter 4 in einer Fertigungszelle 1 an einen weiteren Roboter in der nachfolgenden Fertigungszelle 2 übergeben. Die Fertigungszelle 2 ist nur angedeutet und der Roboter aus dieser ist in der Figur nicht dargestellt.

Für den Übergabeprozess des Produktes 3 von dem Roboter 4 aus der Fertigungszelle 1 an den Roboter aus der Fertigungszelle 2 müssen die Roboter 4 miteinander koordiniert werden.

In der Fertigungszelle 1 ist noch ein weiterer Roboter 5 gezeigt, der ebenfalls im Rahmen der Fertigung des Produktes 3 zum Einsatz kommt und mit weiteren Robotern aus dieser und/oder anderen Produktionszellen 1, 2 koordiniert werden muss.

Jeder der Roboter 4, 5 ist an ein Roboter-Netzwerk 6, 7 angeschlossen. Die beiden Roboternetzwerke 6, 7 sind in der Figur jeweils durch eine Wolke angedeutet. Die beiden Roboternetzwerke 6, 7 sind nicht direkt miteinander verbunden, sondern jeweils über einen eigenen Roboter-Router 8, 9, die Subnetz-Router darstellen, mit dem Zellennetzwerk 10, welches ebenfalls durch eine Wolke angedeutet ist. Das Zellennetzwerk 10 ist wiederum über einen Zellenrouter 11 mit dem Produktionsnetzwerk 12 verbunden. Der Aufbau der zweiten Produktionszelle 2 ist analog, wobei nur der Zellenrouter 13 der zweiten Produktionszelle 2 in der FIG 1 gezeigt ist.

Eine konventionelle Konfiguration der Router 8, 9, 11, 13 ist, diese nur mit einer sogenannten "default route" zu einem nicht dargestellten überlagerten Router oberhalb des Produktionsnetzes 12 zu konfigurieren. Erst der überlagerte Router kennt die Routen in die einzelnen Zellennetze 10. Eine Kommunikation zwischen den Robotern 4, 5 aus verschiedenen Produktionszellen 1, 2 muss daher immer über den überlagerten Router erfolgen.

Nachteilig hieran ist, dass bei einem Ausfall des überlagerten Routers die Kommunikation zwischen den Robotern verschiedener Produktionszellen ebenfalls ausfällt. Im ungünstigsten Fall kann dies zu einem vollständigen Produktionsstopp und kostenintensiven Ausfällen führen.

Insbesondere im Sinne einer verbesserten Betriebs- und Ausfallsicherheit würde es einen erheblichen Vorteil darstellen, wenn die Kommunikation optimal im Sinne kürzester Wege durch das Gesamtnetz geführt werden könnte. Das Gesamtnetz besteht dabei aus dem Produktionsnetz 12, den Zellennetzen 10, den Roboternetzen 6, 7 und ggf. vorhandenen weitere unterlagerten Netzen, die das Netzwerk in einer Zelle 1, 2 aus technischen und/oder organisatorischen Gründen weiter unterteilen. Unnötige "Single Points of Failure" beispielsweis in Form eines zentralen IT-Routers, etwa ein Router oberhalb der Zellenrouter 11, 13 und dem Produktionsnetz 12, sollen vermieden werden.

Die kürzesten Wege könnten "manuell" beispielsweise mit Netzwerk-Planungswerkzeugen berechnet und anschließend manuell in den einzelnen Netzwerkteilnehmern als individuelle Konfigurationen hinterlegt werden. Diese Vorgehensweise ist jedoch recht starr und es wird als nachteilig erachtet, dass in größeren Installationen mitunter längere Download- und/oder Rekonfigurations-Stillstände auftreten könnten.

Die vorliegenden Erfindung schafft daher ein Möglichkeit zur automatischen Konfigurierung optimierter, kürzester Wege.

Hierfür kommen als Zellenrouter 11, 13 Router zum Einsatz, die eine Ausführungsform eines erfindungsgemäßen Routers darstelle.

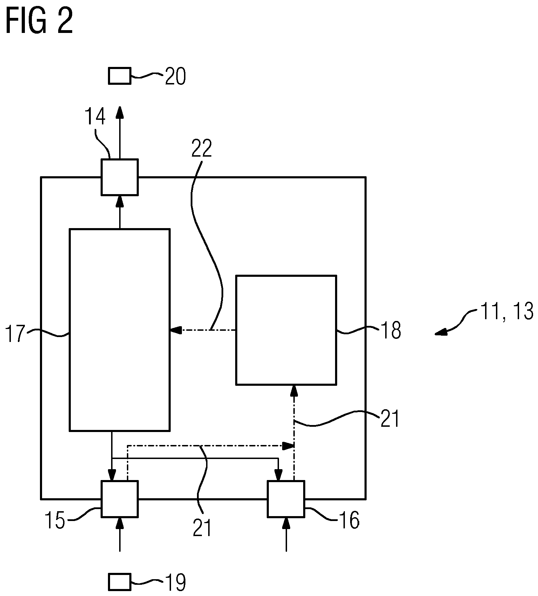

In der FIG 2 ist eine vergrößerte, rein schematische Darstellung der Router 11, 13 mit umfassten Funktionseinheiten gezeigt, wobei, da die beiden Router 11, 13 identisch ausgestaltet und eingerichtet sind, nur ein Router 11, 13 beispielhaft dargestellt ist.

Der Router 11, 13 umfasst ein upstream-Interface 14, welches in Richtung des überlagerten Produktionsnetzes 12 und der default-Route zeigt.

Der Router hat ferner zwei downstream-Interfaces 15, 16, die mit unterlagerten Subnetzen verbunden sind. Im Falle von Produktionszelle 1 ist das downstream-Interface 15 mit dem Zellennetz 10 verbunden. Das downstream-Interface 16 und gegebenenfalls vorhandene weitere downstream-Interfaces können mit weiteren unterlagerten Subnetzen verbunden sein.

Jeder der beiden Zellenrouter 11, 12 umfasst ferner eine Sende-Funktionseinheit 17, die ausgebildet und eingerichtet ist, um Router Advertisement Nachrichten zu senden. Die Sende-Funktionseinheit 17 ist für das korrekte Abwickeln des Router-Advertisement-Protokolls ausgebildet und eingerichtet. Im Rahmen des hier beschriebenen Ausführungsbeispiels ist diese als Software auf einer "universellen" Ausführungs-Hardware in Form eines Prozessors/einer CPU, konkret einer Standard-/"All-Purpose"-CPU gegeben.

Die vorgenannten Komponenten umfassen auch konventionellen Router.

Die Zellenrouter 10, 11, welche Ausführungsbeispiele erfindungsgemäßer Router darstellen, weisen zusätzlich zu den vorstehen beschriebenen Komponenten bzw. Funktionseinheiten eine Specific-Router-Manager-Funktionseinheit 18 auf. Im Rahmen des hier beschriebenen Ausführungsbeispiels ist diese als Software, die einen Router Advertisement Daemon (radvd) umfasst bzw. durch einen solchen gegeben ist, auf einer "universellen" Ausführungs-Hardware in Form eines Prozessors/einer CPU, konkret einer Standard-/"All-Purpose"-CPU gegeben. Es handelt sich vorliegend um die gleiche CPU, auf welcher auch die Software für die Sende-Funktionseinheit 17 ausgeführt wird. Es kann aber natürlich auch eine andere CPU Die Specific-Router-Manager-Funktionseinheit 18 ist ausgebildet und eingerichtet, um spezifische Routen aus Router Advertisement Nachrichten 19, die an einem oder mehreren downstream-Interfaces 15, 16 des Routers 11, 13 empfangen werden, zu erhalten und die Sende-Funktionseinheit 17 des Routers 11, 13 automatisch zu konfigurieren, wenigstens eine Router-Advertisement-Nachricht 20, welche wenigstens eine an einem downstream-Interface empfangene spezifische Route und/oder wenigstens eine Über-Route, in der wenigstens eine an einem downstream-Interface 15, 16 empfangene spezifische Route mit wenigstes einer weiteren, an dem gleichen oder einem anderen downstream-Interface 15, 16 des Routers 11, 13 empfangenen spezifischen Route zusammengefasst ist, aufweist, über das upstream-Interface 14 des Routers 11, 13 zu senden.

Eine an dem downstream-Interface 15 ankommende Router Advertisement Nachricht 19 und eine von dem upstream-Interface gesendete Router Advertisement Nachricht 20 sind in der FIG 2 schematisch dargestellt.

Die spezifischen Routen werden als More Specific Route Option der Router Advertisement Nachrichten 19 insbesondere gemäß RFC 4191 oder als Bestandteil einer solchen gesendet.

Dass die Specific-Router-Manager-Funktionseinheit 18 an downstream-Interfaces 15, 16 ankommende Router Advertisement Nachrichten bzw. mit diesen übermittelte bzw. bekannt gemachte spezifische Routen erhält, ist in der FIG 2 durch strichpunktierte Pfeile 21 angedeutet. Dass sie die Sende-Funktionseinheit 17 zum Senden von Route Advertisement Nachrichten mit wenigstens einer empfangene spezifischen Route und/oder wenigstens einer Über-Route konfiguriert, ist durch den ebenfalls strichpunktierten Pfeil 22 schematisch angedeutet.

In der FIG 1 ist über Pfeile 23 von dem jeweiligen Roboter-Router 8, 9 zu dem Zellennetzwerk 10 und einen Pfeil 24 von dem Zellennetzwerk 10 zu dem Zellenrouter 11 angedeutet, dass von jedem der Roboter-Router 8, 9 Router Advertisement Nachrichten 19 über das Zellennetzwerk 10 an den Zellenrouter 11 gesendet werden. Diese kommen bei dem dargestellten Ausführungsbeispiel an dem downstream-Interface 15 des Routers 11 an.

Die Specific-Router-Manager-Funktionseinheit 18 der Router 11, 13 ist weiterhin ausgebildet und eingerichtet, um eine interne Specific-Route-Tabelle zu führen, in der spezifische Routen, die an einem downstream-Interface 15, 16 des Routers 11, 13 empfangen werden bzw. wurden, gespeichert werden und um insbesondere periodisch zu überprüfen, ob in der Specific-Route-Tabelle spezifische Routen abgelegt sind, die zu einer oder mehreren Über-Routen zusammengefasst werden können, und sofern ein Zusammenfassen von wenigstens zwei spezifischen Routen möglich ist, ein Zusammenfassen durchzuführen, und so erhaltene Über-Routen in der Specific-Route-Tabelle bevorzugt anstelle der zu diesen zusammengefasten spezifischen Routen zu speichern.

Für jede spezifische Route und jede Über-Route wird ein eigener Routen-Eintrag in der Konfigurationsdatei angelegt.

Jede spezifische Route wird dabei zusammen mit einer zugehörigen Lebenszeit gespeichert. Die zu den spezifischen Routen gehörenden Lebenszeiten sind zusammen mit den spezifischen Routen in den an downstream-Interfaces 15, 16 empfangenen Router Advertisement Nachrichten 19 mit MSROs übermittelt worden.

Vorliegend ist sie ferner ausgebildet und eingerichtet, um periodisch und/oder immer dann, wenn an einem downstream-Interface 15, 16 eine Router Advertisement Nachricht 19 mit wenigstens einer spezifischen Route empfangen wird, und/oder immer dann, wenn die Lebenszeit wenigstens einer in der Specific-Route-Tabelle gespeicherten spezifischen Route abgelaufen ist, zu überprüfen, ob in der Specific-Route-Tabelle spezifische Routen gespeichert sind, die zu einer oder mehreren Über-Routen zusammengefasst werden können, und, sofern ein Zusammenfassen von wenigstens zwei spezifischen Routen möglich ist, das Zusammenfassen durchzuführen, und die so erhaltenen Über-Routen in der Specific-Route-Tabelle insbesondere anstelle der zu diesen zusammengefasten spezifischen Routen zu speichern.

Für zusammengefasste Über-Routen wird jeweils diejenige Lebenszeit der zusammengefassten Routen gespeichert, welche am kürzesten ist.

Router Advertisement Nachrichten 19 mit einer MSRO mit wenigstens einer spezifischen Route können an sämtlichen downstream-Interfaces 15, 16 des Routers 11, 13 ankommen.

Weiterhin ist die Specific-Router-Manager-Funktionseinheit 18 ausgebildet und eingerichtet, um die Sende-Funktionseinheit 17 jedes Mal, wenn überprüft wurde, ob in der Specific-Route-Tabelle spezifische Routen gespeichert sind, die zu einer oder mehreren Über-Routen zusammengefasst werden können, und/oder jedes Mal, wenn wenigstens zwei in der Specific-Route-Tabelle gespeicherte spezifische Routen zu wenigstens einer Über-Route zusammengefasst werden konnten, automatisch zu konfigurieren, wenigstens eine Router Advertisement Nachricht 20, welche sämtliche aktuell in der Specific-Route-Tabelle gespeicherten spezifischen Routen und/oder Über-Routen umfasst, über das upstream-Interface 14 des Routers 11, 13 zu senden.

In der FIG 1 ist das Senden von Router Advertisement Nachrichten 20 über ein upstream-Interface 14 des Routers 11 durch einen Pfeil 25 schematisch visualisiert.

Die Specific-Router-Manager-Funktionseinheit 18 ist darüber hinaus ausgebildet und eingerichtet, um diejenigen spezifischen Routen aus der Specific-Route-Tabelle zusammenzufassen, für die gilt, dass ihre Präfixlängen übereinstimmen und dass ihre Präfixlängen größer als 1 sind, und dass ihre Präfixe in allen Bits mit Ausnahme des niederwertigsten Bits übereinstimmen.

Dabei erfolgt eine entsprechende Konfiguration des radvd. Es wird für jede spezifische Route ein eigener Routen-Eintrag in der Konfigurationsdatei angelegt. Die Konfigurationsdatei wird von der Specific-Router-Manager-Funktionseinheit 18 angelegt bzw. eine vorhandene Konfigurationsdatei modifiziert. Sofern möglich, werden Einträge zu Über-Routen zusammengefasst.

Dies sei - lediglich beispielhaft - für drei spezifische Routen R1, R2 und R3, die beispielsweise an dem downstream-Interface 15 oder auch an anderen Interfaces empfangen werden bzw. wurden, für eine rein beispielhafte Konfigurations-Datei gezeigt:

```
 # radvd.conf
 # Fall 1: es sind keine spezifischen Routen und keine Über-
 Routen vorhanden, also keine entsprechenden Einträge in der
 internen Specific Route Tabelle enthalten
 interface upstream {
 ...
 # keine automatisch generierten Routen
 # route ::/64 { };
 };
 # radvd.conf
 # Fall 2: es sind spezifische Routen und/oder Über-Routen
 vohanden
 interface upstream {
 ...
 # automatisch generierte Routen
 # Zusammenfassung der Routen R1+R2
 # 2001:db8:0:02fc::/64 und 2001:db8:0:02fd::/64
 route 2001:db8:0:02fc::/63 {
 AdvRouteLifetime 120;
 };
 # Kein Zusammenfassen der Route R3 mit R1, R2
 # 2001:db8:0:02fe
 route 2001:db8:0:02fe::/64 {
 AdvRouteLifetime 240;
 };
 };
```

Die Sende-Funktionseinheit 17 wird dann veranlasst, die von der Specific-Router-Manager-Funktionseinheit 18 erstellte bzw. modifizierte Konfiguration zu übernehmen. Dies kann geschehen, indem die Sende-Funktionseinheit 17 veranlasst wird, die neue Konfiguration durch Einlesen der Konfigurationsdatei zu übernehmen. Die Sende-Funktionseinheit 17 kann hierfür beispielsweise gestoppt und neu gestartet werden.

Spezifischen Routen und/oder ggf. berechnete Über-Routen sowie zugehörige Lebenszeiten werden dann als More Specific Route Options der über das upstream-Interface 14 gesendeten Router Advertisement Nachrichten 20 insbesondere gemäß RFC 4191 oder als Bestandteil solcher verkündet.

Das korrekte Abkündigen von Routen wird ebenfalls durchgeführt. Konkret kann eine Abkündigung erfolgen, indem für eine betroffene Route eine Lebenszeit von 0 kommuniziert wird. Empfängt der Router an einem downstream-Interface 15, 16 eine Router Advertise Nachricht mit einer spezifischen Route deren Lebenszeit auf 0 gesetzt ist, wird diese spezifische Route zusammen mit der Lebenszeit von 0 am upstream-Interface 14 verkündet. Nach einer gewissen (wähl- bzw. einstellbaren) Übergangszeit wird eine abgekündigte Route mit Lebenszeit 0 nicht mehr weiter ausgestrahlt. Die Specific-Router-Manager-Funktionseinheit 18 ist ausgebildet du eingerichtet, um die Sende-Funktionseinheit entsprechend automatisch zu konfigurieren.

Es sei angemerkt, dass ein Zusammenfassen von spezifischen Routen einer Lebenszeit von Null mit spezifischen Routen einer Lebenszeit ungleich Null in der Regel wenig zweckmäßig sein wird. Entsprechend gilt bevorzugt als weitere Bedingung für ein Zusammenfassen von zwei oder mehr spezifischen Routen, dass entweder alle Routen, die zusammengefasst werden eine Lebenszeit ungleich Null haben oder aber alle Routen, die zusammengefasst werden eine Lebenszeit von Null haben. Letztere Fall entspricht einem Szenario, bei dem alle zusammenfassbaren spezifischen Routen gleichzeitig abgekündigt werden.

Von dem Router 11, 13 über ein upstream-Interface 14 gesendete Router-Advertisement Nachrichten 20 mit wenigstens einer spezifischen Route werden von wenigstens einem weiteren Teilnehmer des Netzwerkes, bevorzugt wenigstens einem Nachbar-Teilnehmer des Routers 11, 13, empfangen. Dieser richtet dann bevorzugt auf Basis der wenigstens einen empfangenen Router Advertisement Nachricht 20 wenigstens eine spezifische Route ein.

Teilnehmer, die die Router Advertisement Nachrichten 20 empfangen können sowohl direkt im gleichen Subnetz befindliche Endgeräte sein oder auch hierarchisch übergeordnete Router.

Auf diese Weise lassen sich automatisch konfigurierende Router-Hierarchien insbesondere in Automatisierungsnetzen aufbauen.

Subnetz-Routen, die per Router Advertisement Nachrichten 19 von unterlagerten Routern bekannt gemacht werden und an einem oder mehreren downstream-Interface(s) 15, 16 eines Routers 11, 13 ankommen, können gesammelt, gegebenenfalls zusammengefasst und auf der nächst höheren Hierarchie-Ebene bekannt gemacht werden. So wird es möglich, dass Anwender auch ohne IT-Kenntnisse sehr einfach Router-Hierarchien aufbauen können, wobei spezifische Routen automatisch verkündet und optimiert werden.

Aufgrund der Möglichkeit des Zusammenfassen von Routen werden Geräte dabei nur mit der geringst nötigen Anzahl spezifischer Routen versorgt, so dass der Speicher- und Laufzeitbedarf in den Geräten nicht unnötig belastet wird.

Im vorliegenden Falle können, da spezifische Routen automatisch konfiguriert wurden, beispielsweise Roboter 4, 5 auch aus verschiedenen Zellennetzen 1, 2 direkt miteinander kommunizieren, ohne auf einen zentralen IT-Router angewiesen zu sein.

Es kann ein optimiertes, adaptives Routing innerhalb einer Hierarchie erfolgen, ohne dass es einer statischen Planung bedarf. Stillstände beispielsweise einer Anlage mit einem Netzwerk aufgrund einer erforderlichen manuellen (Um-)Konfigurierung können zuverlässig und vollständig vermieden werden.

Es sei angemerkt, das bei dem hier beschriebenen Ausführungsbeispiel die beiden Router 11, 13 jeweils in Form von separaten Netzwerkgeräten gegeben sind, die nur die Routing-Funktion übernehmen. Alternativ dazu kann die Funktion auch in ein Gerät integriert sein, welches anderen Zwecken dient, etwa in eine Steuerung, z.B. eine speicherprogrammierbare Steuerung einer Automatisierungsanlage. Selbstverständlich ist es auch möglich, dass beispielsweise ein Computer, auf welchem entsprechend Software installiert ist, (wenigstens) einen Router gemäß der vorliegenden Erfindung darstellt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum automatischen Konfigurieren von Routen in einem insbesondere industriellen Netzwerk bevorzugt einer industriellen Automatisierungsanlage, bei dem von wenigstens einem Router (11, 13) an einem downstream-Interface (15, 16) wenigstens eine Router-Advertisement-Nachricht (19) mit wenigstens einer spezifischen Route empfangen wird, und eine Sende-Funktionseinheit (17) des wenigstens einen Routers (11, 13) bevorzugt automatisch konfiguriert wird, wenigstens eine Router-Advertisement-Nachricht (20), welche die wenigstens eine spezifische Route und/oder wenigstens eine Über-Route, in der die wenigstens eine spezifische Route mit wenigstes einer weiteren, an dem gleichen oder einem anderen downstream-Interface (15, 16) des wenigstens einen Routers (11, 13) empfangenen spezifischen Route zusammengefasst ist, aufweist, über ein upstream-Interface (14) des wenigstens einen Routers (11, 13) zu senden.

2. Verfahren nach Anspruch 1,
**dadurch gekennzeichnet, dass** jede spezifische Route, die an einem downstream-Interface (15, 16) des wenigstens einen Routers (11, 13) empfangen wird bzw. wurde über ein upstream-Interface (14) des wenigstens einen Routers (11, 13) entweder in der empfangenen oder in einer zu einer Über-Route zusammengefassten Form weitergeleitet wird.

3. Verfahren nach Anspruch 1 oder 2,
**dadurch gekennzeichnet, dass** an wenigstens einem downstream-Interface (15, 16) des wenigstens einen Routers (11, 13) wenigstens eine Router-Advertisement-Nachricht (19) mit zwei oder mehr spezifischen Routen empfangen wird, und/oder dass an wenigstens einem downstream-Interface (15, 16) des wenigstens einen Routers (11, 13) zwei oder mehr Router-Advertisement-Nachrichten (19) mit jeweils wenigstens einer spezifischen Route empfangen werden, und/oder dass der wenigstens eine Router (11, 13) zwei oder mehr downstream-Interfaces (15, 16) aufweist und an wenigstens zwei downstream-Interfaces (15, 16) jeweils wenigstens eine Router-Advertisement-Nachricht (19) mit jeweils wenigstens einer spezifischen Route empfangen wird.

4. Verfahren nach Anspruch 3,
**dadurch gekennzeichnet, dass** zwei oder mehr spezifische Routen, die an einem oder verschiedenen downstream-Interfaces (15, 16) des wenigstens einen Routers (11. 13) empfangen werden, zu wenigstens einer gemeinsamen Über-Route zusammengefasst werden, und insbesondere über das upstream-Interface (14) des wenigstens einen Routers (11, 13) wenigstens eine Router-Advertise-Nachricht (20) mit der zusammengefassten Über-Route gesendet wird.

5. Verfahren nach Anspruch 4,
**dadurch gekennzeichnet, dass** spezifische Routen zusammengefasst werden für die gilt, dass ihre Präfixlängen übereinstimmen und/oder dass ihre Präfixlängen größer als 1 sind, und/oder dass ihre Präfixe in allen Bits mit Ausnahme des niederwertigsten Bits übereinstimmen.

6. Verfahren nach einem der vorhergehenden Ansprüche,
**dadurch gekennzeichnet, dass** die wenigstens eine Router-Advertisement-Nachricht (20), welche die wenigstens eine spezifische Route und/oder die wenigstens eine Über-Route umfasst, ausschließlich über ein upstream- (14) und nicht über ein downstream-Interface (15, 16) des wenigstens einen Routers (11, 13) gesendet wird.

7. Verfahren nach einem der vorhergehenden Ansprüche,
**dadurch gekennzeichnet, dass** jede von dem wenigsten einen Router (11, 13) empfangene spezifische Route ein Präfix und/oder eine Adresse und/oder eine Präfixlänge oder eine Angabe, aus welcher die Präfixlänge ableitbar ist, umfasst bzw. hierdurch gebildet wird, und/oder dass jede von dem wenigstens einen Router (11, 13) gesendete spezifische Route und/oder Über-Route ein Präfix und/oder eine Adresse und/oder eine Präfixlänge oder eine Angabe, aus welcher die Präfixlänge ableitbar ist, umfasst bzw. hierdurch gebildet wird.

8. Verfahren nach einem der vorhergehenden Ansprüche,
**dadurch gekennzeichnet, dass** von dem wenigstens einen oder für den wenigstens einen Router (11, 13) eine Specific-Route-Tabelle geführt wird, in welcher spezifische Routen, die an einem downstream-Interface (15, 16) des wenigstens einen Routers (11, 13) empfangen werden oder wurden insbesondere mit zugehörigen Lebenszeiten gespeichert werden.

9. Verfahren nach Anspruch 8,
**dadurch gekennzeichnet, dass** bevorzugt periodisch und/oder immer dann, wenn an einem downstream-Interface (15, 16) eine Router Advertisement Nachricht (19) mit wenigstens einer spezifischen Route empfangen wird, und/oder immer dann, wenn die Lebenszeit wenigstens einer in der Specific-Route-Tabelle gespeicherten spezifischen Route abgelaufen ist, überprüft wird, ob in der Specific-Route-Tabelle spezifische Routen abgelegt sind, die zu einer oder mehreren Über-Routen zusammengefasst werden können, und sofern ein Zusammenfassen von wenigstens zwei spezifischen Routen möglich ist, ein Zusammenfassen erfolgt, und insbesondere so erhaltene Über-Routen in der Specific-Route-Tabelle bevorzugt anstelle der zu diesen zusammengefasten spezifischen Routen gespeichert werden.

10. Verfahren nach Anspruch 9,
**dadurch gekennzeichnet, dass** jedes Mal, wenn überprüft wurde, ob in der Specific-Route-Tabelle spezifische Routen gespeichert sind, die zu einer oder mehreren Über-Routen zusammengefasst werden können, und/oder jedes Mal, wenn wenigstens zwei in der Specific-Route-Tabelle gespeicherte spezifische Routen zu wenigstens einer Über-Route zusammengefasst werden konnten, wenigstens eine Router Advertisement Nachricht (20), welche bevorzugt sämtliche aktuell in der Specific-Route-Tabelle gespeicherten spezifischen Routen und/oder Über-Routen umfasst, über ein upstream-Interface (14) des wenigstens einen Routers (11, 13) gesendet wird.

11. Verfahren nach einem der vorhergehenden Ansprüche,
**dadurch gekennzeichnet, dass** das wenigstens eine upstream-Interface (14) des wenigstens einen Routers (11, 13) in Richtung einer default-Route und/oder in Richtung wenigstens eines überlagerten Subnetzes zeigt, und/oder dass das wenigstens eine downstream-Interface (15, 16) des wenigstens einen Routers (11, 13) mit wenigstens einem unterlagerten Subnetz verbunden ist oder wird, bevorzugt verschiedene downstream-Interfaces (15, 16) des wenigstens einen Routers (11, 13) mit verschiedenen unterlagerten Subnetzen verbunden sind oder werden.

12. Verfahren nach einem der vorhergehenden Ansprüche,
**dadurch gekennzeichnet, dass** von dem wenigstens einen Router (11, 13) periodisch Router-Advertisement-Nachrichten (19) mit wenigstens einer spezifischen Route an einem oder mehreren downstream-Interfaces (15, 16) empfangen und/oder periodisch Router-Advertisement-Nachrichten (20) mit wenigstens einer spezifischen Route und/oder wenigstens einer Über-Route über ein upstream-Interface (14) gesendet werden.

13. Verfahren nach einem der vorhergehenden Ansprüche,
**dadurch gekennzeichnet, dass** die wenigstens eine über ein downstream-Interface (15, 16) des wenigstens einen Routers (11, 13) empfangene und/oder die wenigstens eine über ein upstream-Interface (14) des wenigstens einen Routers (11, 13) gesendete spezifische Route und/oder Über-Route als More Specific Route Option insbesondere gemäß RFC 4191 oder als Bestandteil einer solchen gesendet wird.

14. Verfahren nach einem der vorhergehenden Ansprüche,
**dadurch gekennzeichnet, dass** wenigstens eine von dem wenigstens einen Router (11, 13) über ein upstream-Interface (14) gesendete Router-Advertisement Nachricht (20) mit wenigstens einer spezifischen Route von wenigstens einem weiteren Teilnehmer des Netzwerkes, insbesondere wenigstens einem Nachbar-Teilnehmer des wenigstens einen Routers (11, 13), empfangen wird, und bevorzugt der wenigstens eine weitere Teilnehmer auf Basis der wenigstens einen Router Advertisement Nachricht (20) wenigstens eine spezifische Route einrichtet.

15. Verfahren zur Datenkommunikation in einem industriellen Netzwerk, in dem wenigstens eine Route unter Durchführung des Verfahrens nach einem der Ansprüche 1 bis 14 automatisch konfiguriert wird oder wurde, und Daten zwischen dem wenigstens einen Router (11, 13) und wenigstens einem weiteren Teilnehmer direkt ohne Rückgriff auf einen überlagerten Router übertragen werden.

16. Steuerungsverfahren für einen industriellen technischen Prozess oder ein Fahrzeug, bei dem zwischen wenigstens zwei Komponenten einer Automatisierungsanlage Daten unter Durchführung des Verfahrens nach Anspruch 13 übertragen werden und auf Basis der übertragenen Daten eine Steuerung des industriellen technischen Prozesses oder Fahrzeugs erfolgt.

17. Router (11, 13), der zur Durchführung des Verfahrens nach einem der vorhergehenden Ansprüche ausgestaltet und eingerichtet ist.

18. Router (11, 13) nach Anspruch 17,
**dadurch gekennzeichnet, dass** der Router (11, 13) eine Specific-Router-Manager-Funktionseinheit (18) umfasst, welche ausgebildet und/oder eingerichtet ist, um spezifische Routen aus Router Advertisement Nachrichten (19), die an einem oder mehreren downstream-Interfaces (15, 16) des Routers (11, 13) empfangen werden, zu erhalten und eine Sende-Funktionseinheit (17) des Routers (11, 13) bevorzugt automatisch zu konfigurieren, wenigstens eine Router-Advertisement-Nachricht (20), welche wenigstens eine an einem downstream-Interface (15, 16) empfangene spezifische Route und/oder wenigstens eine Über-Route, in der wenigstens eine an einem downstream-Interface (15, 16) empfangene spezifische Route mit wenigstes einer weiteren, an dem gleichen oder einem anderen downstream-Interface (15, 16) des Routers (11, 13) empfangenen spezifischen Route zusammengefasst ist, aufweist, über ein upstream-Interface (14) des Routers (11, 13) zu senden.

19. Router (11, 13) nach Anspruch 18,
**dadurch gekennzeichnet, dass** die Specific-Router-Manager-Funktionseinheit (18) ausgebildet und/oder eingerichtet ist, um eine Specific-Route-Tabelle zu führen, in der spezifische Routen, die an einem downstream-Interface (15, 16) des Routers (11, 13) empfangen werden oder wurden, insbesondere mit zugehörigen Lebenszeiten gespeichert werden.

20. Router (11, 13) nach Anspruch 19,
**dadurch gekennzeichnet, dass** die Specific-Router-Manager-Funktionseinheit (18) ausgebildet und/oder eingerichtet ist, um bevorzugt periodisch und/oder immer dann, wenn an einem downstream-Interface (15, 16) eine Router Advertisement Nachricht (19) mit wenigstens einer spezifischen Route empfangen wird, und/oder immer dann, wenn die Lebenszeit wenigstens einer in der Specific-Route-Tabelle gespeicherten spezifischen Route abgelaufen ist, zu überprüfen, ob in der Specific-Route-Tabelle spezifische Routen gespeichert sind, die zu einer oder mehreren Über-Routen zusammengefasst werden können, und, sofern ein Zusammenfassen von wenigstens zwei spezifischen Routen möglich ist, das Zusammenfassen bevorzugt durchzuführen, und insbesondere die so erhaltenen Über-Routen in der Specific-Route-Tabelle bevorzugt anstelle der zu diesen zusammengefasten spezifischen Routen zu speichern.

21. Router (11, 13) nach Anspruch 20,
**dadurch gekennzeichnet, dass** die Specific-Router-Manager-Funktionseinheit (18) ausgebildet und/oder eingerichtet ist, um die Sende-Funktionseinheit (17) jedes Mal, wenn überprüft wurde, ob in der Specific-Route-Tabelle spezifische Routen gespeichert sind, die zu einer oder mehreren Über-Routen zusammengefasst werden können, und/oder jedes Mal, wenn wenigstens zwei in der Specific-Route-Tabelle gespeicherte spezifische Routen zu wenigstens einer Über-Route zusammengefasst werden konnten, bevorzugt automatisch zu konfigurieren, wenigstens eine Router Advertisement Nachricht (20), welche insbesondere sämtliche aktuell in der Specific-Route-Tabelle gespeicherten spezifischen Routen und/oder Über-Routen umfasst, insbesondere ausschließlich über ein upstream-Interface (14) des Routers (11, 13) zu senden.

22. Router (11, 13) nach Anspruch 20 oder 21,
**dadurch gekennzeichnet, dass** die Specific-Router-Manager-Funktionseinheit (18) ausgebildet und/oder eingerichtet ist, um diejenigen spezifischen Routen aus der Specific-Route-Tabelle zusammenzufassen für die gilt, dass ihre Präfixlängen übereinstimmen und/oder dass ihre Präfixlängen größer als 1 sind, und/oder dass ihre Präfixe in allen Bits mit Ausnahme des niederwertigsten Bits übereinstimmen.

23. Computerprogramm umfassend Programmcode-Mittel zur Durchführung des Verfahrens nach einem der Ansprüche 1 bis 16.

24. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 16 durchzuführen.
